(19) Europäisches Patentamt

**European Patent Office**

**Office européen des brevets**

(11) Numéro de publication : **0 023 440**

**B1**

(12) **FASCICULE DE BREVET EUROPÉEN**

(45) Date de publication du fascicule du brevet :
**13.07.83**

(21) Numéro de dépôt : **80400983.5**

㉒ Date. de dépôt : **30.06.80**

(51) Int. Cl.³ : **F 16 B 37/04**

(54) Dispositif d'immobilisation d'écrous prisonniers.

(30) Priorité : **27.07.79 FR 7919400**

(43) Date de publication de la demande :
**04.02.81 Bulletin 81/05**

(45) Mention de la délivrance du brevet :
**13.07.83 Bulletin 83/28**

(84) Etats contractants désignés :
**DE FR GB IT SE**

(56) Documents cités :
**FR A 855 184**
**US A 1 448 555**
**US A 1 592 627**
**US A 2 140 628**
**US A 2 144 553**
**US A 2 401 824**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Melicque, Gaston Edmond Eugène**
**15, Place des Loriots**
**F-91540 Mennecy (FR)**

(74) Mandataire : **Molnat, François et al**
**S.N.E.C.M.A. Service des Brevets Boîte Postale 81**
**F-91003 Evry Cedex (FR)**

Jouve, 18, rue St-Denis, 75001 Paris, France

Dispositif d'immobilisation d'écrous prisonniers

La présente invention a pour objet un dispositif d'immobilisation d'écrous prisonniers.

Les écrous prisonniers utilisés dans les ensembles qui sont destinés à être fréquemment démontés (pour l'entretien, les contrôles, etc...) sont immobilisés en général par un moyen de sertissage ou de soudage, sur une plaquette qui est elle-même soudée, rivée ou sertie sur l'organe de support.

Lorsqu'il s'agit d'écrous autofreinants cette disposition présente pour la maintenance un inconvénient sérieux. Ils doivent, en effet, être changés fréquemment, et il faut alors utiliser un outillage spécial pour ouvrir les parties serties et, une perceuse ou une fraiseuse à main, pour éliminer les rivets ou les points de soudure.

Toutefois, ces opérations entraînent souvent des altérations qui nécessitent l'emploi de pièces présentant des cotes spéciales pour effectuer les réparations. En outre, il faut noter que lorsqu'il s'agit d'écrous soudés sur une plaquette, les soudures doivent faire l'objet d'un contrôle radiographique.

On connaît d'autre part par US-A-2 140 628 un dispositif d'immobilisation d'écrous prisonniers comportant un pontet dont la paroi médiane présente un trou situé au regard du trou taraudé de l'écrou et destiné à recevoir la partie filetée d'une vis. Un élément de retenue comportant deux pattes opposées immobilise en rotation l'écrou.

Toutefois, l'élément de retenue de ce dispositif forme un deuxième pontet s'emboîtant de manière ajustée à l'intérieur du pontet fixé sur la structure. Cette solution présente l'inconvénient de doubler la masse de l'élément de fixation. De plus, après chaque démontage, le pontet interne formant l'élément de retenue, serti à l'intérieur du premier pontet, doit être changé.

La présente invention a pour objet un dispositif d'immobilisation d'écrou qui ne présente aucun des inconvénients mentionnés ci-dessus.

Conformément à l'invention, dans un dispositif d'immobilisation d'écrous prisonniers par rapport à un organe d'une structure, du type dans lequel un pontet fixé sur l'organe de la structure comporte une paroi médiane et deux parois latérales et présente un trou situé dans la paroi médiane au regard du trou taraudé de l'écrou, on prévoit un élément de retenue immobilisant l'écrou en rotation qui est constitué d'une barrette dont les pattes opposées sont engagées dans des trous ménagés dans les parois latérales du pontet, ledit écrou présentant une collerette disposée entre la paroi médiane et la barrette.

La collerette de l'écrou agit ainsi à la façon d'une rondelle d'étalement et la paroi médiane du pontet se trouve prise entre la collerette de la vis et la collerette de l'écrou.

La plaquette n'est déformée ni au cours du montage ni au cours du serrage, elle peut donc être réutilisée après chaque démontage.

Cette disposition permet le remplacement éventuel de l'écrou prisonnier sans outillage spécial.

Par ailleurs, l'utilisation d'un fil frein permet de maintenir la barrette en place lors d'un démontage.

D'autres caractéristiques et avantages de l'invention seront mieux compris à la lecture de la description qui va suivre d'un mode de réalisation et en se référant aux dessins annexés, sur lesquels :

la figure 1 est une vue en perspective du dispositif d'immobilisation d'écrou dont les pièces sont disposées avant leur montage ;

la figure 2 est une vue en élévation et en coupe axiale du dispositif d'immobilisation d'écrou ;

la figure 3 est une vue latérale du dispositif d'immobilisation d'écrou.

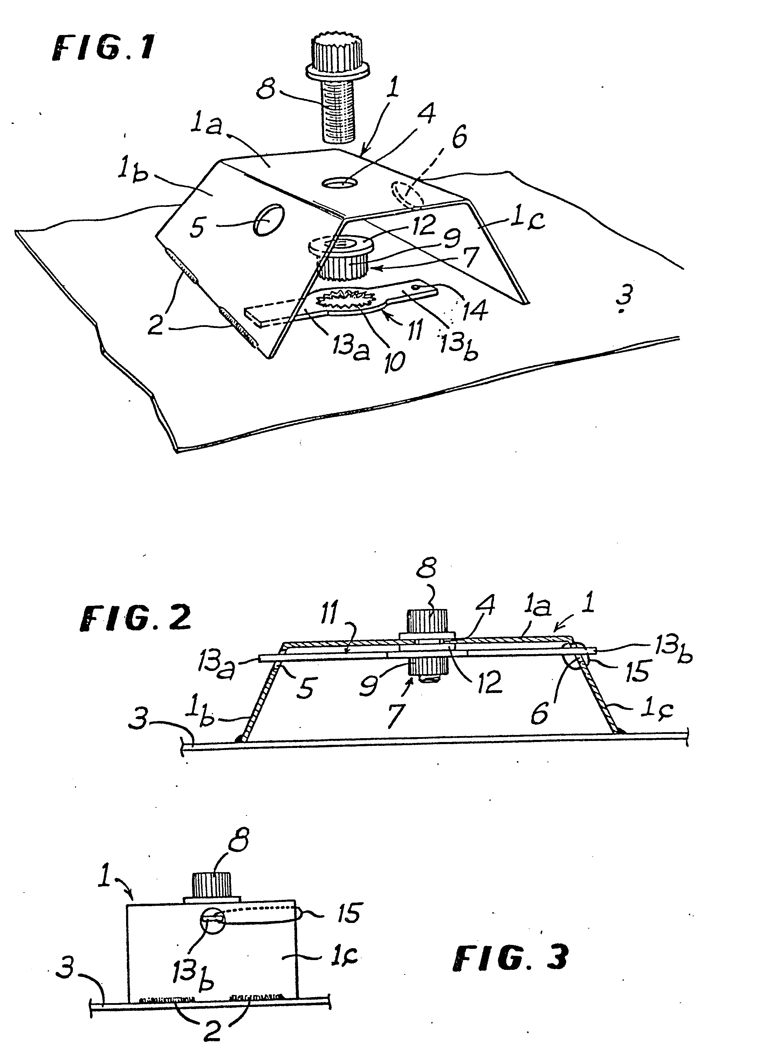

Aux figures 1, 2 et 3 on a représenté un mode de réalisation du dispositif d'immobilisation d'un écrou prisonnier suivant l'invention. Ce dispositif comprend un pontet 1 qui est fixé notamment au moyen de points de soudure 2 sur une plaque 3 d'une structure quelconque.

Le pontet 1 comporte une paroi médiane 1a et deux parois latérales 1b et 1c qui présentent respectivement des trous 4, 5 et 6. En regard du trou 4 du pontet 1 est disposé le trou taraudé d'un écrou autofreinant 7 qui est destiné à recevoir la partie filetée d'une vis 8. L'écrou 7 présente une denture 9 qui est engagée dans un trou 10 d'une barrette 11 présentant une dentelure correspondant à la denture 9 afin d'immobiliser en rotation l'écrou 7.

Par ailleurs, l'écrou 7 présente, d'un côté, une collerette 12 qui est en appui d'un côté contre la paroi médiane 1b du pontet 1 et de l'autre côté contre la barrette 11, lorsque les deux pattes 13a, 13b de la barrette 11 sont engagées respectivement dans les trous 5 et 6. Pour assurer le maintien de la barrette 11 lors d'un démontage, celle-ci présente un trou 14 dans lequel est engagé un fil frein 15 qui est disposé autour de la paroi latérale 1c du pontet.

Le montage du dispositif s'effectue de la manière suivante : l'écrou 7 étant introduit par sa partie dentée 9 dans le trou denté correspondant 10 de la barrette 11, on obtient un ensemble constitué par l'écrou monté sur la barrette, ledit ensemble étant engagé sous le pontet 1, on introduit les pattes 13a, 13b de la barrette 11 dans les trous 5 et 6. L'écrou 7 étant ainsi prisonnier, il est alors possible de visser la vis 8 dans l'écrou 7. Ensuite on engage le fil 15 dans le trou 14 de la barrette et on dispose celui-ci autour de la paroi 1c comme représenté à la figure 3.

Le dispositif trouve son application dans les systèmes qui imposent de fréquents démontages. Sur un turboréacteur d'aviation, par exemple, la fixation des rampes d'injection sur le carter de chambre ainsi que la fixation de divers équipements montés directement sur le carter se trouvent facilitées par l'emploi de tels écrous prisonniers.

Bien entendu la description n'est pas limitative et l'homme de l'art pourra y apporter des modifications sans sortir pour cela du domaine de l'invention.

## Revendications

1. Dispositif d'immobilisation d'écrous prisonniers (7) par rapport à un organe (3) d'une structure, dans lequel est fixé, sur l'organe de la structure, un pontet (1) comportant une paroi médiane (1a) et deux parois latérales (1b, 1c), un trou (4) de la paroi médiane (1a) étant situé en regard du trou taraudé de l'écrou (7) destiné à recevoir la partie filetée d'une vis (8), ledit écrou (7) étant immobilisé en rotation dans un élément comportant deux pattes opposées, caractérisé en ce que ledit élément est constitué d'une barrette (11), dont les pattes opposées (13a, 13b) sont engagées dans des trous (5), (6) ménagés dans les parois latérales (1b, 1c) du pontet, ledit écrou (7) présentant une collerette (12) disposée entre la paroi médiane (1a) et la barrette (11).

2. Dispositif selon la revendication 1, caractérisé en ce que la barrette (11) présente un orifice (10) muni d'une dentelure dans lequel est engagée une partie dentée (9) correspondante de l'écrou (7).

3. Dispositif selon les revendications 1 et 2, caractérisé en ce qu'au moins l'une des pattes (13a, 13b) de la barrette présente un trou (14) dans lequel est engagé un fil frein (15) qui est disposé autour de la paroi latérale (1c) du pontet (1).

## Claims

1. Captive-nut securing device (7) with respect to a member (3) of a structure, in which is secured, on a member of the structure, a bridge member (1) comprising an intermediate wall (1a) and two lateral walls (1b, 1c), a hole (4) of the intermediate wall (1a) being disposed opposite to the tapped hole of the nut (7), intended to receive the screwed threaded part of a bolt (8), the said nut (7) being secured against rotation in a member comprising two opposed wings, characterised in this that the said member is constituted by a bar (11), of which the opposed wings (13a, 13b) are engaged in holes (5), (6) provided in the lateral walls (1b, 1c), of the bridge member, the said nut (7) having a collar (12) disposed between the intermediate wall (1a) and the bar (11).

2. Device according to claim 1, characterised in this that the bar (11) has an opening (10) provided with a series of teeth in which is engaged a corresponding toothed part (9) of the nut (7).

3. Device according to claim 1 and 2, characterised in this that at least one of the wings (13a, 13b) of the bar has a hole (14) in which is engaged a retaining wire (15) which is disposed around the lateral wall (1c) of the bridge member (1).

## Ansprüche

1. Vorrichtung zum Festsetzen von Käfigmuttern (7) an einem Bauteil (3) eines Aufbaus, bei der an dem Aufbauteil ein Brückenteil (1) befestigt ist, das eine Mittelwand (1a) und zwei Seitenwände (1b, 1c) aufweist und bei dem eine Bohrung (4) in der Mittelwand (1a) der zur Aufnahme des Gewindeteils einer Schraube (8) bestimmten Gewindebohrung der Mutter (7) gegenüberliegt, die in einem mit zwei voneinander abgewandten Laschen versehenen Element drehfest gehalten ist, dadurch gekennzeichnet, daß das genannte Element als Schiene (11) ausgebildet ist, deren voneinander abgewandte Laschen in Bohrungen (5, 6) eingeschoben sind, die in den Seitenwänden (1b, 1c) des Brückenteils vorgesehen sind, und daß die Mutter (7) einen Kragen (12) aufweist, der sich zwischen der Mittelwand (1a) und der Schiene (11) befindet.

2. Vorrichtung nach Anspruch 1, dadurch gekennzeichnet, daß die Schiene (11) eine mit einem Zackenrand versehene Öffnung (10) aufweist, die einen entsprechend gezahnten Teil (9) der Mutter (7) aufnimmt.

3. Vorrichtung nach den Ansprüchen 1 und 2, dadurch gekennzeichnet, daß in mindestens eine der Laschen (13a, 13b) der Schiene ein Loch (14) geschnitten ist, durch das ein um die Seitenwand (1c) des Brückenteils (1) geschlungener Haltedraht (15) gezogen ist.

**FIG.1**

**FIG.2**

**FIG.3**